# EUROPÄISCHE PATENTSCHRIFT

(11) **EP 1 842 805 B1**
(45) Veröffentlichungstag und Bekanntmachung des Hinweises auf die Patenterteilung: **28.07.2010**
(21) Anmeldenummer: 07006677.4
(22) Anmeldetag: 30.03.2007
(51) Int. Cl.: B65G 17/12, B65G 17/46, B65G 47/08, B65D 71/00, B67C 3/24

(54) **Vorrichtung zum Transport von Flaschen**
Device for transporting bottles
Dispositif destiné au transport de bouteilles

(30) Priorität: 03.04.2006 DE 102006015843
(43) Veröffentlichungstag der Anmeldung: 10.10.2007
(73) Patentinhaber: Finnah Packtec GmbH, 48683 Ahaus (DE)
(72) Erfinder: Dube, Michael, 46325 Borken (DE); Eickholt, Hubert, 48356 Nordwalde (DE); Herdes, Marcellus, 48703 Stadtlohn (DE); Massing, Martin, 48683 Ahaus (DE)
(74) Vertreter: Busse & Busse

(56) Entgegenhaltungen:
- EP-A1- 0 559 291
- DE-U1- 7 623 086
- DE-U1- 29 821 746

## Beschreibung

Die Erfindung betrifft eine Vorrichtung zum Transport von Flaschen gemäß dem Oberbegriff des Anspruchs 1.

Bei bekannten Vorrichtungen dieser Art (DE 298 21 746.5 U) werden die zu transportierenden Flaschen in zellenbrettartigen Trägerleisten aufgenommen, wozu diese eine Reihe von L-förmig verlaufenden Formausnehmungen aufweisen, die eine aufwendige Herstellung erfordern und die Stabilität der Tragerleisten herabsetzen. Über einen Öffnungsschlitz der L-Kontur sind die Flaschenhälse durch einen zur Hochachse der Flaschen gerichteten horizontalen Einhängevorgang erfaßbar.

Die Erfindung befaßt sich mit dem Problem, eine Vorrichtung zum Transport von Flaschen zu schaffen, deren mit geringerem technischem Aufwand herstellbare Trägerleisten eine erhöhte Stabilität aufweisen, dabei die Aufnahme des Flaschenhalses eine veränderte Zuführbewegung ermöglicht und so eine Erhöhung der Vorschubfrequenz bei der Verlagerung der Trägerleisten in einer Flaschenabfüllanlage erreichbar ist.

Die Erfindung löst diese Aufgabe durch eine Transportvorrichtung mit den Merkmalen des Anspruchs 1. Weitere vorteilhafte Ausgestaltungen ergeben sich aus den Ansprüchen 2 bis 11.

Die Transportvorrichtung für Flaschen ist im Bereich der Trägerleisten dadurch verbessert, daß diese in erfindungsgemäßer Ausführung mit Aufnahmeöffnungen versehen wird, die eine geschlossene Randkontur aufweisen. Damit weist die zellenbrettartige Trägerleiste eine stabilere Gestaltung auf, da in Umfangsrichtung an den Längs- bzw. Querseiten der Trägerleiste keine Einschnitte vorhanden sind. Diese Aufnahmeöffnungen können mit geringem technischem Aufwand in ein brettartiges Ausgangsmaterial eingeformt werden, wobei an jeweilige Flaschenformate anpaßbare Randkonturen weitgehend beliebiger geometrischer Gestalt in den Aufnahmeöffnungen denkbar sind.

Damit bilden die Aufnahmeöffnungen für die Flaschen bzw. den Flaschenhals jeweilige Durchgriffsöffnungen in der Trägerleiste, so daß bei der Anwendung in einer Flaschenfüllanlage o. dgl. eine insbesondere senkrecht zur Plattenebene der Trägerleiste erfolgende Einführbewegung möglich ist. Bereits bei dieser Bedienphase kann ein im Randbereich der Aufnahmeöffnung vorgesehener Formansatz nach Art eines Rückhalteelementes wirksam werden, so daß danach die für den Weitertransport vorgesehene hängende Position der Flasche gesichert ist.

In einer Weiterbildung dieser geschlossenen Aufnahmeöffnung ist vorgesehen, diese mit zwei Teilbereichen, nämlich einem Aufnahmeraum und einem Halteraum, zu versehen. Bei dieser Ausführung wird erreicht, daß nach der Verlagerung des Flaschenhalses in den Aufnahmeraum eine Querverlagerung der Flasche zum Halteraum hin eine Fixierung des Flaschenhalses in der vorgesehenen Hänge-Position bewirkt. Diese Querverlagerung der bereits in die Aufnahmeöffnung bzw. deren Aufnahmeraum eingeführten Flasche kann dabei entsprechend der vorgesehenen Ausrichtung in der Flaschenfüllanlage in weitgehend beliebigen Richtungen erfolgen, wozu die Trägerleiste mit entsprechend konturierten Teilbereichen in der Aufnahmeöffnung gefertigt wird.

Weitere Einzelheiten und vorteilhafte Ausgestaltungen ergeben sich aus der nachfolgenden Beschreibung und der Zeichnung, in der die Transportvorrichtung mit der erfindungsgemäßen Trägerleiste in mehreren Ausführungen näher veranschaulicht ist. In der Zeichnung zeigen:
- Fig. 1: eine teilweise geschnittene Seitenansicht einer Flaschenfüllanlage mit die zugeführten Flaschen übernehmenden Trägerleisten auf einer Förderbahn,
- Fig. 2: eine Draufsicht auf die Flaschenfüllanlage gemäß Fig. 1, und
- Fig. 3 bis Fig. 5: jeweilige Ausführungsformen von Trägerleisten mit einer randseitig geschlossenen Aufnahmeöffnung für die Flaschenhälse.

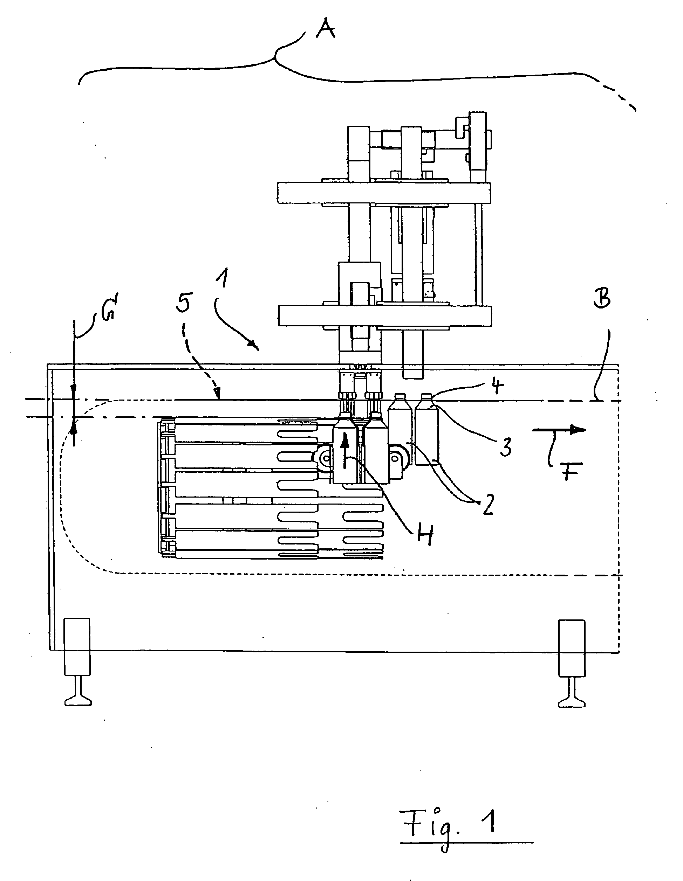

In Fig. 1 ist ein Teilbereich einer insgesamt mit A bezeichneten Bearbeitungsanlage, insbesondere einer Flaschenfüllanlage, dargestellt, wobei diese eine mit einer Transportvorrichtung 1 versehenen Flaschenaufgabestation aufweist, von der ausgehend weitere nicht dargestellte Stationen anzusteuern sind.

Die Transportvorrichtung 1 ist insbesondere für die Aufnahme von PET-Flaschen 2 o. dgl. Kunststoff-Flaschen vorgesehen, die im Bereich ihres Flaschenhalses 3 mit einem Tragring 4 versehen sind. Diese Flaschen 2 sind entlang einer Bearbeitungsbahn B in der Flaschenabfüllanlage A zu bewegen, wobei als Träger eine die Flaschenhälse 3 im Bereich der Tragringe 4 aufnehmende Trägerleiste 5 vorgesehen ist, die in zellenbrettartiger Ausbildung als bekanntes Bauteil jeweilige Formausnehmungen aufweist (DE 298 21 746 U).

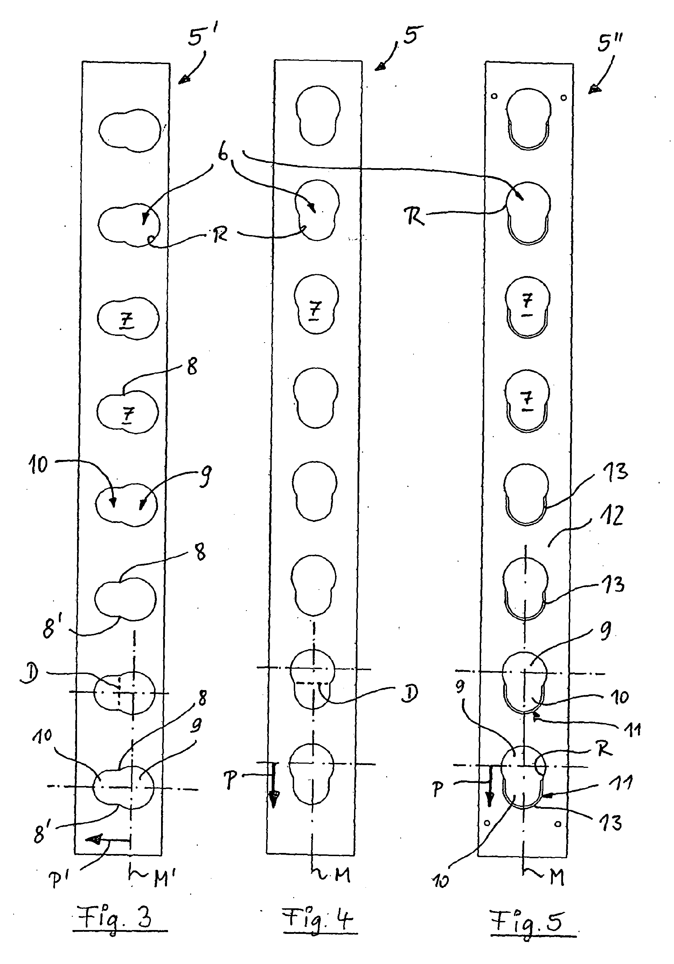

In erfindungsgemäßer Ausführung sind die Trägerleisten 5 mit Formausnehmungen versehen, die als jeweilige Aufnahmeöffnungen 6 mit einer geschlossenen Randkontur R ausgebildet sind (Fig. 3 bis 5).

In einfachster Ausführung ist denkbar, die Aufnahmeöffnung 6 an den Flaschenhals 3 bzw. den Tragring 4 der PET-Flasche 2 so anzupassen, daß durch eine elastische Deformation des Wandungs- bzw. Tragringmaterials der Flasche 2 bei deren Einschubbewegung (Pfeil H, Fig. 1, mit Verlagerung um das Maß G) eine "Pressung" erfolgt. Durch entsprechende Rückstellung des Materials ist eine "Clips"-Fixierung der dann hängenden Flasche 2 für den Weitertransport (Pfeil F) in der Flaschenabfüllanlage A ermöglicht.

In vorteilhafter Ausführung ist vorgesehen, daß die Aufnahmeöffnungen 6 im Bereich der Randkontur R mit zumindest einem in den Innenraum 7 vorstehenden Formansatz 8 versehen sind. Ebenso ist denkbar, daß im Bereich der geschlossenen Randkontur R jeweils mehrere als Widerlage wirksame Formansätze vorgesehen sind. In jedem Fall sind zusätzliche Haltemittel entbehrlich.

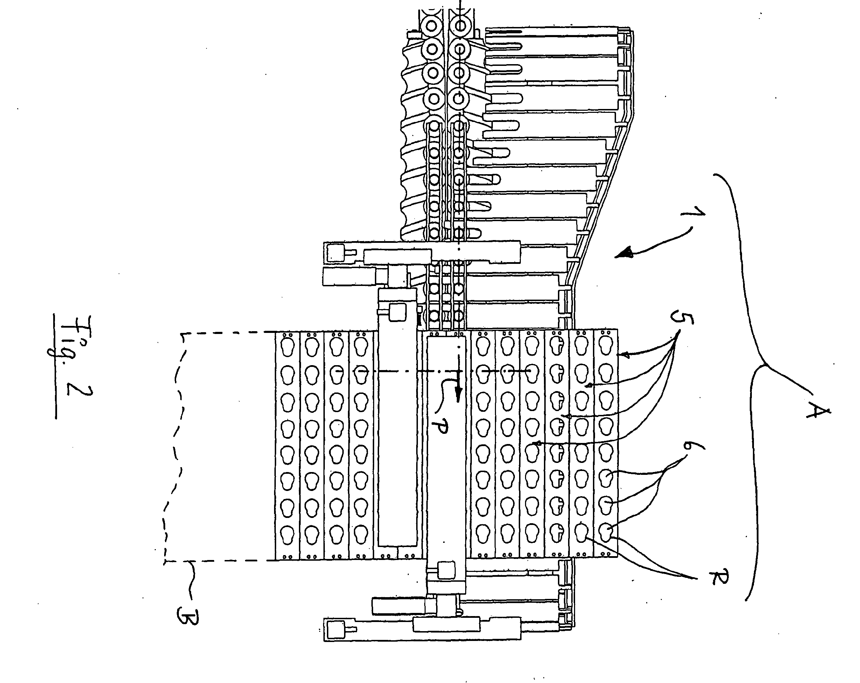

Mit diesem Aufbau der Trägerleiste 5 im Bereich der geschlossenen Aufnahmeöffnungen 6 ist es möglich, die vertikal zugeführte Flasche (Hub H) an Stelle des vorbeschriebenen Formschlusses auch durch eine horizontale Querverlagerung (Pfeil P, Fig. 2) in der Aufnahmeöffnung 6 bzw. an deren Randkontur R form- und/oder kraftschlüssig festzulegen. In Fig. 3 ist diese Verlagerungsmöglichkeit der Flasche 2 bzw. des Flaschenhalses 3 durch den quer zu einer Mittellängsebene M' der Trägerleiste 5' verlaufenden Bewegungspfeil P' angedeutet. Bei den in Fig. 4 und 5 dargestellten Ausführungen der Trägerleiste 5 bzw.5" erfolgt die Verlagerung P entsprechend in Richtung der Längsmittelebene M der beiden Trägerleisten 5, 5".

Die Draufsichten der Trägerleisten 5, 5', 5" gemäß Fig. 2 bis 5 verdeutlichen eine Ausführungsform der Aufnahmeöffnung 6, die jeweils ähnliche Randkonturen R aufweisen. Wesentlich ist dabei, daß diese Aufnahmeöffnungen 6 eine kreisförmige erste Zuführöffnung 9 aufweisen und diese sich mit einer zweiten kreisförmigen Halteöffnung 10 kleineren Durchmessers verschneidet. Damit wird eine vergleichsweise einfache Konturierung erreicht, bei der sich die jeweiligen Umfangslinien der beiden Konturen verschneiden und damit zwei nach Art der Formansätze 8, 8' verlaufende Bereiche bilden und zwischen diesen eine bei der Querbewegung P wirksame Verengung (Strichlinie D) gebildet ist. Dabei sind die Kreisbögen der Bereiche 9 und 10 so bemessen, daß entsprechend dem Durchmesser des Flaschenhalses 3 eine Klemm- bzw. Rastverbindung möglich ist.

Bei der in Fig. 5 dargestellten Tragleiste 5" ist zusätzlich im Bereich der Aufnahmeöffnung 6 bzw. im Bogenbereich der Halteöffnung 10 eine Profilierung 11 vorgesehen, die in Form einer Wulst oder einer Rinne 13 an der Oberseite 12 der Trägerleiste 5"so ausgebildet sein kann, daß bei der Positionierung der Flasche 2 in der Bewegungsrichtung P (Fig. 2, Fig. 5) der jeweilige Flaschenhals 3 bzw. der Tragring 4 durch diese Profilierung 11 erfaßt und damit die Hänge-Lage (Fig. 1) der Flasche 2 auf der Bahn B zusätzlich gesichert wird.

## Patentansprüche

1. Vorrichtung zum Transport von Flaschen, insbesondere von am Flaschenhals (3) einen Tragring (4) aufweisenden PET-Flaschen (2), mit der die Flaschen (2) entlang einer Bewegungsbahn (B) in einer Flaschenabfüllanlage (A) zu bewegen sind, wobei als Träger eine die Flaschenhälse (3) in jeweiligen Formausnehmungen aufnehmende und zellenbrettartig ausgebildete Trägerleiste (5) vorgesehen ist, **dadurch gekennzeichnet, daß** in der Trägerleiste (5) als Formausnehmungen jeweilige Aufnahmeöffnungen (6) mit geschlossener Randkontur (R) vorgesehen sind.

2. Vorrichtung nach Anspruch 1, **dadurch gekennzeichnet, daß** die Aufnahmeöffnungen im Bereich der Randkontur (R) einen in den Innenraum (7) vorstehenden Formansatz (8) aufweisen.

3. Vorrichtung nach Anspruch 1 oder 2, **dadurch gekennzeichnet, daß** die Aufnahmeöffnungen (6) im Bereich der geschlossenen Randkontur (R) jeweils mehrere Formansätze (8, 8') aufweisen.

4. Vorrichtung nach einem der Ansprüche 1 bis 3, **dadurch gekennzeichnet, daß** die vertikal (H) zugeführte Flasche (2) durch eine horizontale Verlagerung (P, P') in der Aufnahmeöffnung (6) festlegbar ist.

5. Vorrichtung nach Anspruch 4, **dadurch gekennzeichnet, daß** die in der Aufnahmeöffnung (6) befindliche Flasche (2) in unterschiedliche Richtungen (P, P') verlagerbar ist.

6. Vorrichtung nach Anspruch 4 oder 5, **dadurch gekennzeichnet, daß** die Flasche (2) in Richtung der Längsmittelebene (M) der Trägerleiste (5, 5") verlagerbar ist.

7. Vorrichtung nach Anspruch 4 oder 5, **dadurch gekennzeichnet, daß** die Flasche (2) quer zu einer Mittelebene (M') der Trägerleiste (5') verlagerbar ist.

8. Vorrichtung nach einem der Ansprüche 1 bis 7, **dadurch gekennzeichnet, daß** die Aufnahmeöffnung (6) eine im wesentlichen kreisförmige erste Zuführöffnung (9) aufweist und diese sich mit einer zweiten kreisförmigen Halteöffnung (10) kleineren Durchmessers verschneidet, derart, daß die sich verschneidenden Kreisbogenkonturen nach Art der Formansätze (8, 8') verlaufende Bereiche bilden und zwischen diesen eine für eine Rastverbindung geeignete Verengung (D) besteht.

9. Vorrichtung nach einem der Ansprüche 1 bis 8, **dadurch gekennzeichnet, daß** die Aufnahmeöffnung (6) im Bereich der Randkontur (R) eine oberseitige Profilierung (11) aufweist.

10. Vorrichtung nach Anspruch 9, **dadurch gekennzeichnet, daß** die Profilierung (11) als Wulst oder Rinne (13) geformt ist.

11. Vorrichtung nach einem der Ansprüche 1 bis 10, **dadurch gekennzeichnet, daß** die Aufnahmeöffnung (6) bzw. die Zuführ- und/oder Halteöffnung (9, 10) vieleckig oder oval ausgebildet ist/sind.

## Claims

1. Device for conveying bottles, in particular PET bottles (2) having a support ring (4) on the bottle neck (3), by means of which device the bottles (2) are intended to be moved along a movement path (B) in a bottle-filling system (A), wherein the carrier provided is a carrier strip (5) of cell board-type design that receives the bottle necks (3) in respective shaped cutouts, **characterized in that** the shaped cutouts provided in the carrier strip (5) are respective receiving openings (6) having a closed edge contour (R).

2. Device according to Claim 1, **characterized in that** the receiving openings have, in the region of the edge contour (R), a shaped lug (8) which projects into the interior (7).

3. Device according to Claim 1 or 2, **characterized in that** the receiving openings (6) each have, in the region of the closed edge contour (R), a plurality of shaped lugs (8, 8').

4. Device according to one of Claims 1 to 3, **characterized in that** the bottle (2), which is fed in vertically (H), can be secured in the receiving opening (6) by a horizontal displacement (P, P').

5. Device according to Claim 4, **characterized in that** the bottle (2) situated in the receiving opening (6) can be displaced in different directions (P, P').

6. Device according to Claim 4 or 5, **characterized in that** the bottle (2) can be displaced in the direction of the longitudinal mid-plane (M) of the carrier strip (5, 5").

7. Device according to Claim 4 or 5, **characterized in that** the bottle (2) can be displaced transversely with respect to a mid-plane (M') of the carrier strip (5').

8. Device according to one of Claims 1 to 7, **characterized in that** the receiving opening (6) comprises a substantially circular first feed opening (9) and this intersects with a second circular retaining opening (10) of smaller diameter in such a way that the intersecting circular arc contours form regions extending in the manner of the shaped lugs (8, 8') and a constriction (D) suitable for a latching connection is present between these regions.

9. Device according to one of Claims 1 to 8, **characterized in that** the receiving opening (6) has, in the region of the edge contour (R), a profiling (11) on the upper side.

10. Device according to Claim 9, **characterized in that** the profiling (11) is formed as a bead or groove (13).

11. Device according to one of Claims 1 to 10, **characterized in that** the receiving opening (6), or the feed and/or retaining opening (9, 10), has a polygonal or oval design.

## Revendications

1. Dispositif destiné au transport de bouteilles, en particulier de bouteilles en PET (2) présentant sur le goulot (3) un anneau porteur (4), avec lequel les bouteilles (2) sont à déplacer le long d'une voie de déplacement (B) dans une installation de remplissage de bouteilles (A), comme support étant prévue une barre porteuse (5) réalisée comme une planche cellulaire et présentant les goulots (3) dans des évidements moulés respectifs, **caractérisé en ce que** des ouvertures de réception (6) respectives avec un contour de bord (R) fermé sont prévues dans la barre porteuse (5) comme évidements moulés.

2. Dispositif selon la revendication 1, **caractérisé en ce que** les ouvertures de réception présentent dans la zone du contour de bord (R) un épaulement moulé (8) dépassant dans l'espace intérieur (7).

3. Dispositif selon la revendication 1 ou 2, **caractérisé en ce que** les ouvertures de réception (6) présentent dans la zone du contour de bord (R) fermé respectivement plusieurs épaulements moulés (8, 8').

4. Dispositif selon l'une quelconque des revendications 1 à 3, **caractérisé en ce que** la bouteille (2) amenée verticalement (H) peut être fixée par un déplacement (P, P') horizontal dans l'ouverture de réception (6).

5. Dispositif selon la revendication 4, **caractérisé en ce que** la bouteille (2) se trouvant dans l'ouverture de réception (6) peut être déplacée dans différentes directions (P, P').

6. Dispositif selon la revendication 4 ou 5, **caractérisé en ce que** la bouteille (2) peut être déplacée en direction du plan médian longitudinal (M) de la barre porteuse (5, 5'').

7. Dispositif selon la revendication 4 ou 5, **caractérisé en ce que** la bouteille (2) peut être déplacée transversalement à un plan médian (M') de la barre porteuse (5').

8. Dispositif selon l'une quelconque des revendications 1 à 7, **caractérisé en ce que** l'ouverture de réception (6) présente une première ouverture d'amenée (9) essentiellement circulaire et celle-ci se coupe avec une seconde ouverture de retenue (10) circulaire de diamètre plus petit de telle sorte que les contours d'arc de cercle se coupant forment des zones s'étendant comme les épaulements moulés (8, 8') et un rétrécissement (D) convenant à un assemblage par encliquetage existe entre celles-ci.

9. Dispositif selon l'une quelconque des revendications 1 à 8, **caractérisé en ce que** l'ouverture de réception (6) présente dans la zone du contour de bord (R) un profilage (11) côté supérieur.

10. Dispositif selon la revendication 9, **caractérisé en ce que** le profilage (11) est formé comme un bourrelet ou une rigole (13).

11. Dispositif selon l'une quelconque des revendications 1 à 10, **caractérisé en ce que** l'ouverture de réception (6) ou l'ouverture d'amenée et/ou de retenue (9, 10) est/sont réalisées de manière polygonale ou ovale.
